# EUROPÄISCHE PATENTANMELDUNG

(11) **EP 3 772 869 A1**
(43) Veröffentlichungstag der Anmeldung: **10.02.2021**
(21) Anmeldenummer: 19190010.9
(22) Anmeldetag: 05.08.2019
(51) Int. Cl.: H05B 33/08, H05B 37/02

(54) **RÜCKKOPPELUNGSFREI GESTEUERTE BELEUCHTUNGSVORRICHTUNG**

(71) Anmelder: Lunatone Industrielle Elektronik GmbH, 1210 Wien (AT)
(72) Erfinder: Mair, Alexander, 2285 Breitstetten (AT)
(74) Vertreter: Patentanwaltskanzlei Matschnig & Forsthuber OG

(57) **Zusammenfassung**

Die Erfindung betrifft eine rückkoppelungsfrei gesteuerte Beleuchtungsvorrichtung (1), umfassend
- eine durch getaktete Ein- und Ausschaltung dimmbare LED-Lichtquelle (2),
- eine Steuereinheit (3) zur getakteten Ein- und Ausschaltung der LED-Lichtquelle (2), wobei die rückkoppelungsfrei gesteuerte Beleuchtungsvorrichtung (1) weiters
- einen der LED-Lichtquelle (2) zugeordneten Lichtsensor (4) umfasst,
wobei der Lichtsensor (4) dazu eingerichtet ist, Umgebungslicht (LU) während der Zeitdauer, in der die LED-Lichtquelle (2) ausgeschaltet ist, zu erfassen, wobei der Lichtsensor (LU) zur Übertragung erfasster Umgebungslichtdaten (LD) an die Steuereinheit (3) mit dieser verbunden ist, wobei die Steuereinheit (3) dazu eingerichtet ist, die LED-Lichtquelle (2)
- in Abhängigkeit von den erfassten Umgebungslichtdaten (LD) und
- unabhängig von dem durch die LED-Lichtquelle (2) im Einschaltzustand abgestrahlten Licht (LLED),

entsprechend dem zeitlichen Verlauf zumindest eines vorgebbaren Beleuchtungszeitprofiles (BP1, BP2) zu steuern.

## Beschreibung

Die Erfindung betrifft eine rückkoppelungsfrei gesteuerte Beleuchtungsvorrichtung. Ferner betrifft die Erfindung eine Außenbeleuchtung umfassend eine erfindungsgemäße Beleuchtungsvorrichtung.

Beleuchtungsvorrichtungen, die rückkoppelungsfreie Steuerungen aufweisen, folgen im einfachsten Fall einem strickt vorgegebenen Schema - z.B. einem festen Zeitfahrplan oder einer Zeitschaltuhr. Solche Beleuchtungsvorrichtungen sind aus dem Stand der Technik hinreichend bekannt.

Intelligentere Beleuchtungsvorrichtungen, die die aktuelle Beleuchtungssituation berücksichtigen können, weisen typischerweise einen Lichtsensor auf, wobei damit das Licht in einem Raum erfasst wird, und in Abhängigkeit davon eine abzustrahlende Lichtmenge geregelt wird. Die Erfassung des Lichts durch den Sensor umfasst dabei ebenso das Licht der Lichtquelle selbst, beispielsweise einer Leuchtstofflampe. Durch diese Rückkopplungen können Rückkopplungen, insbesondere Schwingungen oder Schwebungen im Regelkreis entstehen, die für das menschliche Auge sichtbar sein können und störend wahrgenommen werden.

Eine Aufgabe der Erfindung besteht daher darin, eine Beleuchtungsvorrichtung zu schaffen, die die eingangs genannten Nachteile des Standes der Technik behebt. Diese Aufgabe wird mit einer Beleuchtungsvorrichtung der eingangs genannten Art gelöst, die erfindungsgemäß eine durch getaktete Ein- und Ausschaltung dimmbare LED-Lichtquelle, und eine Steuereinheit zur getakteten Ein- und Ausschaltung der LED-Lichtquelle aufweist, wobei die rückkoppelungsfrei gesteuerte Beleuchtungsvorrichtung weiters einen der LED-Lichtquelle zugeordneten Lichtsensor umfasst, wobei der Lichtsensor dazu eingerichtet ist, Umgebungslicht während der Zeitdauer, in der die LED-Lichtquelle ausgeschaltet ist, zu erfassen, wobei der Lichtsensor zur Übertragung erfasster Umgebungslichtdaten an die Steuereinheit mit dieser verbunden ist, wobei die Steuereinheit dazu eingerichtet ist, die LED-Lichtquelle in Abhängigkeit von den erfassten Umgebungslichtdaten und unabhängig von dem durch die LED-Lichtquelle im Einschaltzustand abgestrahlten Licht, entsprechend dem zeitlichen Verlauf zumindest eines vorgebbaren Beleuchtungszeitprofiles zu steuern.

Der Ausdruck "rückkoppelungsfrei" bedeutet dabei, dass die Steuerung unabhängig von dem durch die Beleuchtungsvorrichtung abgestrahlten Lichts erfolgt. Es können dabei auch zwei oder mehrere LED-Lichtquellen vorgesehen sein. Der Lichtsensor oder die Zufuhr oder die Erfassung der Umgebungslichtdaten kann so ausgestaltet sein, dass diese ausschließlich während der Zeitdauer erfolgt, in der die Lichtquellen ausgeschaltet sind. Hierzu kann die Ansteuerung durch die Steuereinheit gemeinsam mit der Umgebungslichterfassung getaktet sein. Ebenso kann einfach vorgesehen sein, dass die Steuereinheit selbst in Kenntnis der Ausschaltzeitdauer nur jene Lichtsensordaten, die während der Ausschaltzeitdauer erfasst werden, als Umgebungslichtdaten heranzieht.

Vorzugsweise kann vorgesehen sein, dass der Lichtsensor und die LED-Lichtquelle in einer gemeinsamen die LED-Lichtquelle aufnehmenden Öffnung der Beleuchtungsvorrichtung angeordnet sind, wobei die Öffnung der Beleuchtungsvorrichtung dergestalt ausgebildet ist, dass das Licht der LED-Lichtquelle nach außen abstrahlt werden kann und Umgebungslicht zu den Lichtsensor gelangen kann.

Insbesondere kann vorgesehen sein, dass der Lichtsensor in unmittelbarer Nähe zur LED-Lichtquelle angeordnet ist.

Vorzugsweise kann vorgesehen sein, dass der Lichtsensor und die LED-Lichtquelle in einem gemeinsamen Lichtquellengehäuse angeordnet sind, wobei das Lichtquellengehäuse aus einem lichtdurchlässigen Kunststoff besteht. Das Lichtquellengehäuse kann z.B. einstückig gegossen werden.

Insbesondere kann vorgesehen sein, dass die LED-Lichtquelle selbst zur Erfassung von Umgebungslicht während der Zeitdauer, in der die LED-Lichtquelle außer Betrieb ist, eingerichtet ist, wobei die LED-Lichtquelle ferner dazu eingerichtet ist, die erfassten Umgebungslichtdaten von der LED-Lichtquelle während der Ausschaltzeitdauer an die Steuereinheit zu übertragen, wodurch der Lichtsensor durch die LED-Lichtquelle ausgebildet ist.

Vorzugsweise kann vorgesehen sein, dass die Steuereinheit dazu eingerichtet ist, den Änderungsverlauf der durch den Lichtsensor erfassten Umgebungslichtdaten zu erfassen und basierend darauf auf einen vorliegenden Tageszyklus rückzuschließen, und in Abhängigkeit davon über den Verlauf des Tages zwischen zumindest zwei unterschiedlichen Beleuchtungszuständen zu wählen und die zumindest eine LED-Lichtquelle entsprechend anzusteuern.

Insbesondere kann vorgesehen sein, dass die Beleuchtungsvorrichtung zwei oder mehr LED-Lichtquellen aufweist, deren abstrahlbares Licht voneinander unterschiedliche Lichtfarbe aufweist, wobei die Steuereinheit dazu eingerichtet ist, diese LED-Lichtquellen einzeln anzusteuern. Zudem kann vorgesehen sein, dass die Steuereinheit dazu eingerichtet ist, die LED-Lichtquellen dergestalt getaktet anzusteuern, dass Lichtfarbe und/oder Lichtintensität des durch die Beleuchtungsvorrichtung abgestrahlten Lichtes variiert werden kann. Auf diese Weise kann ein kontinuierlich über den Tagesverlauf veränderbares Beleuchtungsprofil vorgegeben werden. Der getaktete/gepulste Betrieb der LED-Lichtquellen kann im Mikrosekundenbereich erfolgen - eine Zeitdauer, die für das menschliche Auge nicht erfassbar ist, aber ausreichend ist, um das von der Beleuchtung unabhängige Umgebungslicht zu erfassen.

Zudem kann vorgesehen sein, dass der Lichtsensor zur Erfassung der spektralen Zusammensetzung des Umgebungslichts eingerichtet ist, und die Steuereinheit dazu eingerichtet ist, den durch die LED-Lichtquelle abgestrahlte Lichtstrom und/oder die Lichtfarbe in Abhängigkeit davon zu steuern.

Vorzugsweise kann vorgesehen sein, dass der Lichtsensor ebenso zum Erfassen des von der LED-Lichtquelle abgestrahlten Lichts eingerichtet ist, wobei die Beleuchtungsvorrichtung einen Datenspeicher aufweist, auf dem ein Referenzwert des zu erwartenden durch die LED-Lichtquelle abgestrahlten Lichtstroms gespeichert ist, wobei der Referenzwert einer Vergleichsvorrichtung zugeführt ist, die mit dem Lichtsensor verbunden ist und zum Vergleich des Referenzwertes mit dem durch den Lichtsensor erfassten Lichtverteilung eingerichtet ist und ergebnisabhängig von dem Vergleich auf eine Alterung der LED-Lichtquelle rückschließt und bei Überschreiten eines vorgebbaren Alterungsgrenzwertes
a) ein Wartungssignal ausgibt und/oder
b) eine Stromerhöhung der Stromzufuhr an die LED-Lichtquelle durch die Steuereinheit zur Steigerung des abgegebenen Lichtstromes veranlasst.

Der Referenzwert kann auch laufend aktualisierbar sein bzw. können ebenso historische Daten gespeichert werden. Auf diese Weise kann ebenso eine Alterungskennlinie bestimmt werden, die exakte Rückschlüsse auf Alterungserscheinungen der Lichtquelle zulässt und basierend darauf Wartungsintervalle oder Austausch bestimmt werden kann oder Maßnahmen wie eine automatische Stromerhöhung oder eine automatische Kalibration vornehmbar sind.

Weiters kann vorgesehen sein, dass die Beleuchtungsvorrichtung mittels dem Lichtsensor zur Erkennung eines zumindest weitgehend unbeleuchteten Umgebungszustandes eingerichtet ist, und bei Wechsel hin zu einem zumindest geringfügig beleuchteten Umgebungslichtzustand auf das Öffnen einer Tür rückschließt, wobei die Steuereinheit dazu eingerichtet ist, bei Rückschluss auf das Öffnen einer Tür die LED-Lichtquelle für eine vorgegebene Zeitdauer zur Abstrahlung von Umgebungslicht anzusteuern und nach Ablauf der vorgegebenen Zeitdauer wieder abzuschalten. Unter den Begriffen "weitgehend unbeleuchtet" ist ein Zustand zu verstehen, der durch das menschliche Auge als "dunkel" wahrgenommen wird und die Sicht dadurch deutlich eingeschränkt ist. Der Ausdruck "geringfügig beleuchtet" bedeutet hingegen eine Steigerung der Helligkeit in Bezug auf den vorhergehenden dunklen Zustand. Die Lichtmenge kann sich dabei z.B. verdoppelt haben. Typischerweise wird die Lichtmenge ein Vielfaches von dem ursprünglichen Wert annehmen, wenn ein unbeleuchtet fensterloser Raum geöffnet wird, und Umgebungslicht durch die Öffnung in den Raum eindringt.

Die Erfindung betrifft zudem eine Außenbeleuchtung, umfassend eine Beleuchtungsvorrichtung nach einem der vorhergehenden Ansprüche, wobei die Steuereinheit in Verbindung mit dem Lichtsensor anhand der Erfassung des Umgebungslichts zur Unterscheidung zwischen Tag und Nacht eingerichtet ist und der durch die LED-Lichtquelle abstrahlte Lichtstrom und/oder die Lichtfarbe für den Tagzustand anders gewählt ist als für den Nachtzustand.

Die Erfindung ist im Folgenden anhand einer beispielhaften und nicht einschränkenden Ausführungsform näher erläutert, die in den Figuren veranschaulicht ist. Darin zeigt
Figur 1 eine schematische Darstellung einer erfindungsgemäßen rückkoppelungsfrei gesteuerte Beleuchtungsvorrichtung,
Figur 2 zeigt eine beispielhaftes erstes Beleuchtungszeitprofil, und
Figur 3 zeigt ein beispielhaftes zweites Beleuchtungszeitprofil.

In den folgenden Figuren bezeichnen - sofern nicht anders angegeben - gleiche Bezugszeichen gleiche Merkmale.

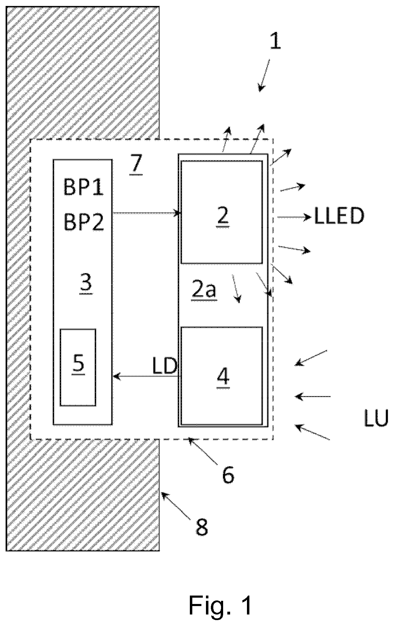

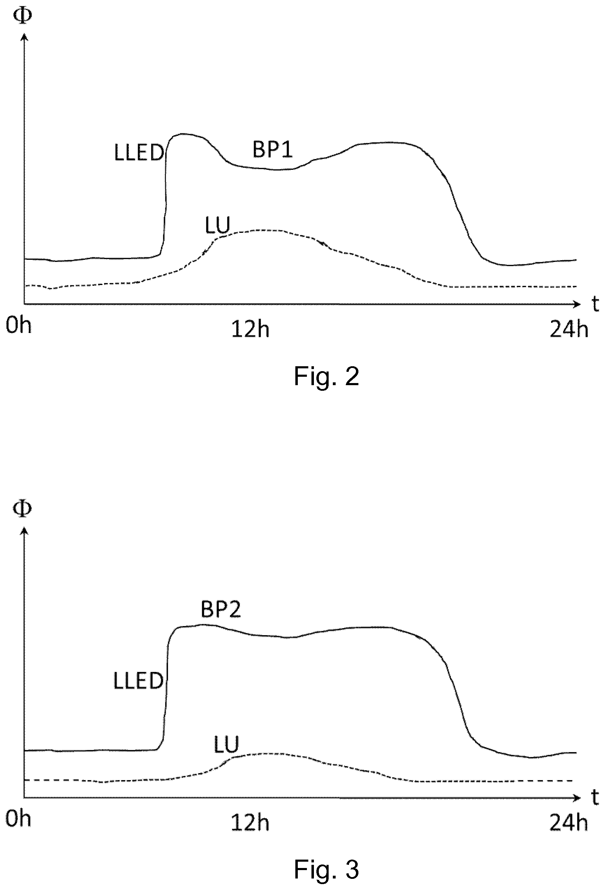

Figur 1 zeigt eine erfindungsgemäße rückkoppelungsfrei gesteuerte Beleuchtungsvorrichtung 1, die beispielsweise an einer Decke 8 montiert ist. Die Beleuchtungsvorrichtung 1 umfasst eine durch getaktete Ein- und Ausschaltung dimmbare LED-Lichtquelle 2 und eine Steuereinheit 3 zur getakteten Ein- und Ausschaltung der LED-Lichtquelle 2. Die LED-Lichtquelle 2 strahlt eine Lichtverteilung LLED ab. Die Beleuchtungsvorrichtung 1 weist zudem einen der LED-Lichtquelle 2 zugeordneten Lichtsensor 4 auf, der dazu eingerichtet ist, Umgebungslicht LU während der Zeitdauer, in der die LED-Lichtquelle 2 ausgeschaltet ist, zu erfassen, wobei der Lichtsensor LU zur Übertragung erfasster Umgebungslichtdaten LD an die Steuereinheit 3 mit dieser verbunden ist. Die Steuereinheit 3 ist dazu eingerichtet, die LED-Lichtquelle 2 in Abhängigkeit von den erfassten Umgebungslichtdaten LD und unabhängig von dem durch die LED-Lichtquelle 2 im Einschaltzustand abgestrahlten Licht LLED entsprechend dem zeitlichen Verlauf zumindest eines vorgebbaren Beleuchtungszeitprofiles BP1, BP2 (siehe Figuren 2 und 3) zu steuern.

Durch die Erfassung des Umgebungslichts LU und die Steuerung unabhängig von den durch die Lichtquellen abgestrahlten Licht - indem die Lichtsensordaten einfach nur während der Zeitdauer der Ausschaltung der LED-Lichtquellen herangezogen werden, können unerwünschte Kopplungen zwischen der Steuerung der Lichtquellen und der tatsächlich abgestrahlten Lichtverteilung verhindert werden.

Der Lichtsensor 4 und die LED-Lichtquelle 2 sind in einer gemeinsamen die LED-Lichtquelle 2 aufnehmenden Öffnung 6, die in der Beleuchtungsvorrichtung 1, vorzugsweise einem lediglich schematisch dargestellten Gehäuse 7 der Beleuchtungsvorrichtung, ausgebildet ist, angeordnet. Die Öffnung 6 ist durch eine strichpunktierte Linie in dem Gehäuse 7 ebenso nur rein schematisch angedeutet. Die Öffnung 6 ist dergestalt ausgebildet, dass das Licht der LED-Lichtquelle LLED nach außen abstrahlt werden kann und Umgebungslicht zu den Lichtsensor 4 gelangen kann.

Der Lichtsensor 4 kann in unmittelbarer Nähe zur LED-Lichtquelle angeordnet sein. Zudem kann der Lichtsensor 4 und die LED-Lichtquelle 2 in einem gemeinsamen Lichtquellengehäuse 2a angeordnet sind, wobei das Lichtquellengehäuse 2a aus einem lichtdurchlässigen Kunststoff besteht.

Die Steuereinheit 3 kann dazu eingerichtet sein, den Änderungsverlauf der durch den Lichtsensor 4 erfassten Umgebungslichtdaten zu erfassen und basierend darauf auf einen vorliegenden Tageszyklus rückzuschließen, und in Abhängigkeit davon über den Verlauf des Tages zwischen zumindest zwei unterschiedlichen Beleuchtungszuständen zu wählen und die zumindest eine LED-Lichtquelle 2 entsprechend anzusteuern. Vorzugsweise weist die die Beleuchtungsvorrichtung 1 zwei oder mehr LED-Lichtquellen 2 auf, deren abstrahlbares Licht voneinander unterschiedliche Lichtfarbe aufweist, wobei die Steuereinheit 3 dazu eingerichtet ist, diese LED-Lichtquellen 2 einzeln anzusteuern. Zur einfacheren Darstellung sind die LED-Lichtquellen 2 nur als ein mit dem Bezugszeichen "2" versehenes rechteckiges Symbol dargestellt - dem Fachmann ist allerdings völlig klar, dass die Wahl und die Anzahl der Lichtquellen in Abhängigkeit der zu realisierenden Lichtverteilung und der Dimensionierung der Beleuchtungsvorrichtung grundsätzlich frei gewählt werden kann. Dies ist insbesondere dann von Interesse, wenn die Steuereinheit 3 ebenso dazu eingerichtet ist, die LED-Lichtquellen 2 dergestalt getaktet anzusteuern, dass Lichtfarbe und/oder Lichtintensität des durch die Beleuchtungsvorrichtung 1 abgestrahlten Lichtes variiert werden kann.

Mit Blick auf Figuren 2 und 3 sind unterschiedliche beispielhafte Beleuchtungszeitprofile BP1 und BP2 erkennbar. BP1 zeigt einen Verlauf einer durch die Lichtquellen 2 abgestrahlten Lichtverteilung LLED an einem Sommertag, in dem das Umgebungslicht hin zur Mittagszeit deutlich zunimmt und im weiteren Tagesverlauf wieder abnimmt. Das Umgebungslicht LU kann durch den Lichtsensor 4 erfasst werden, der diese Information als Umgebungslichtdaten LD an die Steuereinheit 3 weiterleitet. In Kenntnis dieser Umgebungslichtdaten LU kann die Steuereinheit 3 den durchschnittlichen Lichtstrom der Lichtquellen 2 reduzieren, indem beispielsweise das Taktverhältnis von Einschaltzeitdauer zu Ausschaltzeitdauer variiert wird. So kann beispielsweise bei Vorliegen von stärkerem Umgebungslicht die Abstrahlung seitens der Beleuchtungsvorrichtung 1 reduziert werden, und dennoch weiterhin eine ausreichende Beleuchtung eines Raumes erreicht werden. Auf diese Weise können Energieeinsparungen erzielt und die Lebensdauer der Beleuchtungsvorrichtung erhöht werden. Das vorliegende Profil gemäß Figur 2 zeigt einen typischen Arbeitstag, bei dem z.B. gegen 7:00 Uhr früh der erste Mitarbeiter in einem zu beleuchtenden Büroraum erscheint, und die Räumlichkeit über die Beleuchtungsvorrichtung 1 bis ca. 20:00 Uhr mit einer Arbeitsbeleuchtung versorgt wird. Gegen Abend hin wird die abstrahlte Lichtmenge hin zu einer Nachtbeleuchtung abgesenkt. Der Lichtstrom Φ ist in den beiden beispielhaften Figuren 2 und 3 in logarithmischer Skalierung dargestellt.

Figur 3 zeigt beispielsweise das Umgebungslicht LU eines durchschnittlichen Herbsttages, an dem das Umgebungslicht LU im Gegensatz zum Bespiel gemäß Figur 2 deutlich reduziert ist. In diesem Fall kann ein Herbstbenutzerprofil BP2 angewendet werden, dass die Beleuchtung auch hin zur Tagesmitte weniger stark reduziert. Generell kann ein Benutzerprofil auch interaktiv ausgestaltet sein, und vorsehen, dass beispielsweise proportional zu dem anderen Umgebungslicht die Abstrahlung durch die Lichtquellen reduziert wird. Insbesondere kann die gesamte Beleuchtungsstärke als Summe des Umgebungslicht und der durch die Lichtquellen abgestrahlten Lichts konstant gehalten werden oder auch beispielsweise gegen Abend hin abnehmen. Durch die Erfassung des Umgebungslichts LU kann eine gezielte Beeinflussung einer Arbeitsumgebung vorgenommen werden, wobei auf physiologische Einflüsse und eine vorteilhafte Ausgestaltung des Arbeitsplatzes für den Menschen Rücksicht genommen werden kann, indem sowohl die Beleuchtungsintensität als auch die Lichtfarbe optimiert und im Laufe des Tages variiert werden kann.

In Anbetracht dieser Lehre ist der Fachmann in der Lage, ohne erfinderisches Zutun zu anderen, nicht gezeigten Ausführungsformen der Erfindung zu gelangen. Die Erfindung ist daher nicht auf die gezeigte Ausführungsform beschränkt, sondern durch den gesamten Schutzumfang der Ansprüche definiert. Auch können einzelne Aspekte der Erfindung bzw. der Ausführungsform aufgegriffen und miteinander kombiniert werden. Etwaige Bezugszeichen in den Ansprüchen sind beispielhaft und dienen nur der einfacheren Lesbarkeit der Ansprüche, ohne diese einzuschränken.

## Patentansprüche

1. Rückkoppelungsfrei gesteuerte Beleuchtungsvorrichtung (1), umfassend
- eine durch getaktete Ein- und Ausschaltung dimmbare LED-Lichtquelle (2),
- eine Steuereinheit (3) zur getakteten Ein- und Ausschaltung der LED-Lichtquelle (2),
**dadurch gekennzeichnet, dass** die rückkoppelungsfrei gesteuerte Beleuchtungsvorrichtung (1) weiters
- einen der LED-Lichtquelle (2) zugeordneten Lichtsensor (4) umfasst,
wobei der Lichtsensor (4) dazu eingerichtet ist, Umgebungslicht (LU) während der Zeitdauer, in der die LED-Lichtquelle (2) ausgeschaltet ist, zu erfassen, wobei der Lichtsensor (4) zur Übertragung erfasster Umgebungslichtdaten (LD) an die Steuereinheit (3) mit dieser verbunden ist, wobei die Steuereinheit (3) dazu eingerichtet ist, die LED-Lichtquelle (2)
- in Abhängigkeit von den erfassten Umgebungslichtdaten (LD) und
- unabhängig von dem durch die LED-Lichtquelle (2) im Einschaltzustand abgestrahlten Licht (LLED),
entsprechend dem zeitlichen Verlauf zumindest eines vorgebbaren Beleuchtungszeitprofiles (BP1, BP2) zu steuern.

2. Beleuchtungsvorrichtung (1) nach Anspruch 1, wobei der Lichtsensor (4) und die LED-Lichtquelle (2) in einer gemeinsamen die LED-Lichtquelle (2) aufnehmenden Öffnung (6) der Beleuchtungsvorrichtung (1) angeordnet sind, wobei die Öffnung (6) der Beleuchtungsvorrichtung (1) dergestalt ausgebildet ist, dass das Licht der LED-Lichtquelle (2) nach außen abstrahlt werden kann und Umgebungslicht zu den Lichtsensor (4) gelangen kann.

3. Beleuchtungsvorrichtung (1) nach Anspruch 1 oder 2, wobei der Lichtsensor (4) in unmittelbarer Nähe zur LED-Lichtquelle (2) angeordnet ist.

4. Beleuchtungsvorrichtung (1) nach einem der vorhergehenden Ansprüche, wobei der Lichtsensor (4) und die LED-Lichtquelle (2) in einem gemeinsamen Lichtquellengehäuse (2a) angeordnet sind, wobei das Lichtquellengehäuse (2a) aus einem lichtdurchlässigen Kunststoff besteht.

5. Beleuchtungsvorrichtung (1) nach einem der vorhergehenden Ansprüche, wobei die LED-Lichtquelle (2) selbst zur Erfassung von Umgebungslicht während der Zeitdauer, in der die LED-Lichtquelle (2) außer Betrieb ist, eingerichtet ist, wobei die LED-Lichtquelle (2) ferner dazu eingerichtet ist, die erfassten Umgebungslichtdaten von der LED-Lichtquelle (2) während der Ausschaltzeitdauer an die Steuereinheit (3) zu übertragen, wodurch der Lichtsensor (4) durch die LED-Lichtquelle (2) ausgebildet ist.

6. Beleuchtungsvorrichtung (1) nach einem der vorhergehenden Ansprüche, wobei die Steuereinheit (3) dazu eingerichtet ist, den Änderungsverlauf der durch den Lichtsensor (4) erfassten Umgebungslichtdaten zu erfassen und basierend darauf auf einen vorliegenden Tageszyklus rückzuschließen, und in Abhängigkeit davon über den Verlauf des Tages zwischen zumindest zwei unterschiedlichen Beleuchtungszuständen zu wählen und die zumindest eine LED-Lichtquelle (2) entsprechend anzusteuern.

7. Beleuchtungsvorrichtung (1) nach einem der vorhergehenden Ansprüche, wobei die Beleuchtungsvorrichtung (1) zwei oder mehr LED-Lichtquellen (2) aufweist, deren abstrahlbares Licht voneinander unterschiedliche Lichtfarbe aufweist, wobei die Steuereinheit (3) dazu eingerichtet ist, diese LED-Lichtquellen (2) einzeln anzusteuern.

8. Beleuchtungsvorrichtung (1) nach Anspruch 7, wobei die Steuereinheit (3) dazu eingerichtet ist, die LED-Lichtquellen (2) dergestalt getaktet anzusteuern, dass Lichtfarbe und/oder Lichtintensität des durch die Beleuchtungsvorrichtung (1) abgestrahlten Lichtes variiert werden kann.

9. Beleuchtungsvorrichtung (1) nach Anspruch 8, wobei der Lichtsensor (4) zur Erfassung der spektralen Zusammensetzung des Umgebungslichts eingerichtet ist, und die Steuereinheit (3) dazu eingerichtet ist, den durch die LED-Lichtquelle (2) abgestrahlte Lichtstrom und/oder die Lichtfarbe in Abhängigkeit davon zu steuern.

10. Beleuchtungsvorrichtung (1) nach einem der vorhergehenden Ansprüche, wobei der Lichtsensor (4) ebenso zum Erfassen des von der LED-Lichtquelle (2) abgestrahlten Lichts eingerichtet ist, wobei die Beleuchtungsvorrichtung (1) einen Datenspeicher (5) aufweist, auf dem ein Referenzwert des zu erwartenden durch die LED-Lichtquelle (2) abgestrahlten Lichtstroms gespeichert ist, wobei der Referenzwert einer Vergleichsvorrichtung zugeführt ist, die mit dem Lichtsensor (4) verbunden ist und zum Vergleich des Referenzwertes mit dem durch den Lichtsensor (4) erfassten Lichtverteilung eingerichtet ist und ergebnisabhängig von dem Vergleich auf eine Alterung der LED-Lichtquelle (2) rückschließt und bei Überschreiten eines vorgebbaren Alterungsgrenzwertes
a) ein Wartungssignal ausgibt und/oder
b) eine Stromerhöhung der Stromzufuhr an die LED-Lichtquelle (2) durch die Steuereinheit (3) zur Steigerung des abgegebenen Lichtstromes veranlasst.

11. Beleuchtungsvorrichtung (1) nach einem der vorhergehenden Ansprüche, wobei die Beleuchtungsvorrichtung (1) mittels dem Lichtsensor (4) zur Erkennung eines zumindest weitgehend unbeleuchteten Umgebungszustandes eingerichtet ist, und bei Wechsel hin zu einem zumindest geringfügig beleuchteten Umgebungslichtzustand auf das Öffnen einer Tür rückschließt, wobei die Steuereinheit (3) dazu eingerichtet ist, bei Rückschluss auf das Öffnen einer Tür die LED-Lichtquelle (2) für eine vorgegebene Zeitdauer zur Abstrahlung von Umgebungslicht anzusteuern und nach Ablauf der vorgegebenen Zeitdauer wieder abzuschalten.

12. Außenbeleuchtung, umfassend eine Beleuchtungsvorrichtung (1) nach einem der vorhergehenden Ansprüche, wobei die Steuereinheit (3) in Verbindung mit dem Lichtsensor (4) anhand der Erfassung des Umgebungslichts zur Unterscheidung zwischen Tag und Nacht eingerichtet ist und der durch die LED-Lichtquelle (2) abstrahlte Lichtstrom und/oder die Lichtfarbe für den Tagzustand anders gewählt ist als für den Nachtzustand.
